# EUROPÄISCHE PATENTANMELDUNG

(11) **EP 1 717 452 A1**
(43) Veröffentlichungstag der Anmeldung: **02.11.2006**
(21) Anmeldenummer: 06008750.9
(22) Anmeldetag: 27.04.2006
(51) Int. Cl.: F16B 5/00

(54) **Verbindungsvorrichtung zum Verbinden von zwei Bauteilen**

(30) Priorität: 28.04.2005 DE 102005020190
(71) Anmelder: Vierck, Udo, 80339 München (DE)
(72) Erfinder: Vierck, Udo, 80339 München (DE)
(74) Vertreter: Haft, von Puttkamer, Berngruber

(57) **Zusammenfassung**

Die Erfindung betrifft eine Verbindungsvorrichtung zum Verbinden von zwei Bauteilen, mit einem an dem einen Bauteil (200) zu befestigenden Aufnahmeteil (1) und einem an dem anderen Bauteil (100) zu befestigenden Einschubteil (2). Das Aufnahmeteil (2) weist die Form einer einen Innenraum (5) umschließenden Profilschiene auf, wobei der Innenraum (5) sich über eine in Längsrichtung verlaufende schlitzförmigen Öffnung (3) nach außen öffnet. Das Einschubteil (2) umfasst ein komplementär zum Innenraum (5) ausgebildetes Stabteil (6) und einen komplementär zur schlitzförmigen Öffnung (3) ausgebildeten Vorsprungbereich (7). In dem Innenraum (5) des Aufnahmeteiles (1) ist wenigstens ein Verriegelungselement (8;19;30) zur Verriegelung des in das Aufnahmeteil (1) eingeschobenen Einschubteiles (2) an einer vorgegebenen Position des Aufnahmeteiles (1) vorgesehen.

## Beschreibung

Die vorliegende Erfindung betrifft eine Verbindungsvorrichtung zum Verbinden von zwei Bauteilen nach dem Oberbegriff des Patentanspruches 1.

In der DE 297 14 621 ist eine Befestigungsvorrichtung für die Montage eines Bauteiles an einer Profilschiene beschrieben. Dabei weist die Profilschiene einen im wesentlichen rechteckigen Querschnitt auf, der abgesehen von einem in Längsrichtung der Profilschiene in einer Seite derselben verlaufenden Schienenschlitz nach allen Seiten geschlossen ist. Die Befestigungsvorrichtung umfasst ein neben dem Schienenschlitz verlaufende Ränder der Profilschiene hintergreifendes Spannteil sowie ein Schraubteil. Der Schaft des Schraubteiles ragt durch eine Öffnung des mit der Profilschiene zu verbindenden Bauteiles hindurch und ist in dem die Ränder des Schienenschlitzes der Profilschiene hintergreifenden Spannteil verschraubbar.

Die Aufgabe der vorliegenden Erfindung besteht darin, insbesondere zur Verwendung im Haus- oder Gebäudebau, eine Verbindungsvorrichtung zum Verbinden von Bauteilen miteinander zu schaffen, deren an den zu verbindenden Bauteilen befestigte Befestigungselemente einfach miteinander verbindbar sind. Zudem soll die Verbindungsvorrichtung große Kräfte aufnehmen können.

Diese Aufgabe wird durch eine Verbindungsvorrichtung mit den Merkmalen des Patentanspruches 1 gelöst.

Der wesentliche Vorteil der erfindungsgemäßen Verbindungsvorrichtung besteht darin, dass mit ihr in relativ einfacher Weise durch einfaches Ineinanderstecken oder Ineinanderschieben der Befestigungselemente der Verbindungsvorrichtung Bauteile miteinander verbindbar sind, wobei die Verbindungsvorrichtung sehr große Kräfte aufnehmen kann. Aus diesem Grunde eignet sich die vorliegende Verbindungsvorrichtung vorteilhafterweise insbesondere zur Verbindung von Bauteilen im Haus- und Gebäudebau. Vor allem sind mit der erfindungsgemäßen Verbindungsvorrichtung beim Hausbau die folgenden Verbindungen besonders einfach und effektiv herstellbar: Stütze am Stützenfuß, Stütze an Stütze, Hauptträger an Stütze, Nebenträger an Hauptträger, Randträger an Hauptträger, Pfosten an Stütze, Pfette an Stütze, Riegel an Pfosten, Fenster- und Blendrahmen an Pfosten und Platten an Unterkonstruktion. Die vorliegende Verbindungsvorrichtung ist vorteilhafterweise so beschaffen, dass die unter ihrer Verwendung miteinander verbundenen Bauteile flächig aneinander liegen können (verdeckte Beschläge). Ebenso ist es jedoch auch denkbar, Bauteile, Stoß an Stoß miteinander zu verbinden.

Die Befestigungselemente der erfindungsgemäßen Verbindungsvorrichtung sind besonders einfach und effektiv an den zu verbindenden Bauteilen zu montieren, wobei das im wesentlichen durch eine Profilschiene gebildete Aufnahmeteil in einer Nut des entsprechenden Bauteiles befestigbar, zweckmäßigerweise verschraubbar ist.

Ein weiterer wesentlicher Vorteil der vorliegenden Verbindungsvorrichtungen besteht darin, dass sie sehr flexibel einsetzbar sind, weil ihre Befestigungselemente lageunabhängig, d.h. insbesondere vertikal oder horizontal, angeordnet werden können.

Vorteilhafte Ausgestaltungen der Erfindung gehen aus den Unteransprüchen hervor.

Im folgenden werden die erfindungsgemäßen Ausgestaltungen im Zusammenhang mit den Figuren näher erläutert. Es zeigen:
Figur 1 in perspektivischer Darstellung das Aufnahmeteil und das Einschubteil einer ersten Ausführungsform der erfindungsgemäßen Verbindungsvorrichtung;
Figur 2 einen Schnitt durch das Aufnahmeteil und das Einschubteil entlang der Linie II-II der Fig. 1;
Figur 3 eine Darstellung zur Erläuterung einer vertikalen Stütze mit einem horizontalen Träger;
Figur 4 eine Darstellung zur Erläuterung der Über-Eck-Verbindung zweier horizontaler Träger und einer vertikalen Stütze;
Figur 5 eine Darstellung zur Erläuterung der Verbindung einer Stütze mit einem Metallfuß, der in einem Betonfundament angeordnet ist;
Figur 6 einen Schnitt entlang der Linie VI-VI der Figur 5;
Figur 7 einen Schnitt entlang der Linie VII-VII der Figur 5;
Figur 8 eine perspektivische Darstellung der Verbindung gemäß Figur 5;
Figur 9 eine Darstellung zur Erläuterung der Stoß-an-StoßVerbindung zweier Stützen;
Figuren 10 und 11 Schnitte entlang der Linie X-X der Figur 9;
Figur 12 eine Darstellung zur Erläuterung einer zweiten Ausführungsform der erfindungsgemäßen Verbindungsvorrichtung;
Figur 13 einen Schnitt entlang der Linie XIII-XIII der Figur 12;
Figur 14 eine Darstellung zur Erläuterung der zweiten Ausführungsform der Figur 12;
Figur 15 eine dritte Ausführungsform der erfindungsgemäßen Verbindungsvorrichtung, z. B. zur Befestigung von Platten an einem Träger;
Figuren 16 bis 18 eine vierte Ausführungsform der erfindungsgemäßen Verbindungsvorrichtung, z. B. zur Befestigung einer Stütze am einem Fußteil;
Figuren 19 und 20 eine fünfte Ausführungsform der erfindungsgemäßen Verbindungsvorrichtung;
Figuren 21 und 22 eine sechste Ausführungsform der erfindungsgemäßen Verbindungsvorrichtung;
Figuren 23 und 24 eine siebte Ausführungsform der erfindungsgemäßen Verbindungsvorrichtung; und
Figuren 25 bis 27 eine Weiterbildung der Erfindung.

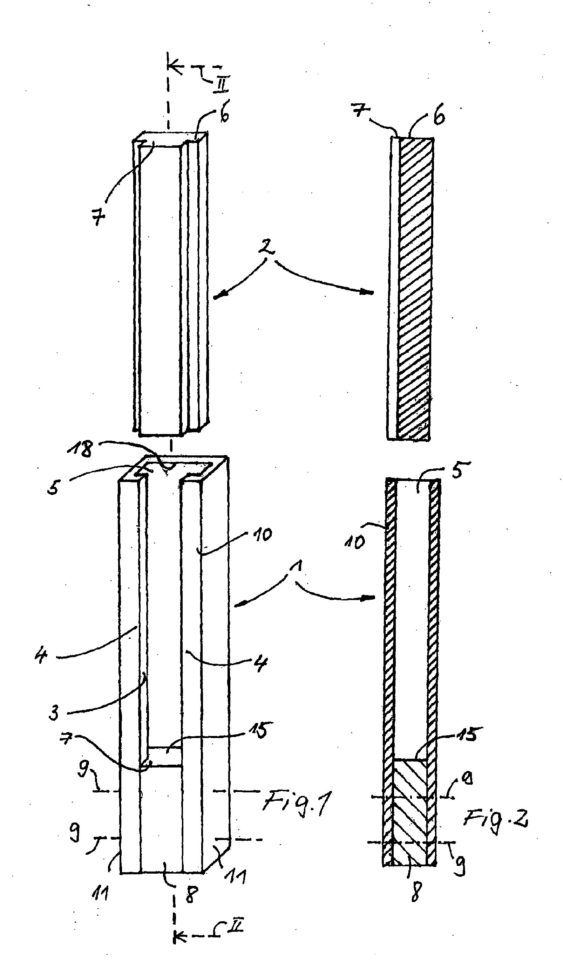

Gemäß Fig. 1 umfasst die vorliegende Verbindungsvorrichtung ein Aufnahmeteil 1 und ein Einschubteil 2. Das Aufnahmeteil 1, das das eine Befestigungselement der vorliegenden Verbindungsvorrichtung darstellt, besteht im wesentlichen aus einer einen Innenraum 5 umschließenden Profilschiene, die vorzugsweise einen rechteckigen Querschnitt besitzt, In einer Wand 10 weist die Profilschiene eine in Längsrichtung verlaufende schlitzförmige Öffnung 3 auf, deren in Längsrichtung verlaufende Ränder mit 4 bezeichnet sind. Die schlitzförmige Öffnung 3 steht mit dem Innenraum 5 in Verbindung. Vorzugsweise handelt es sich bei der Profilschiene um eine sogenannte C-Profilschiene.

In einem Endbereich des Aufnahmeteiles 1 ist ein Auflageteil 8 befestigt.

Das Einschubteil 2, das das andere Befestigungselement der vorliegenden Verbindungsvorrichtung bildet, ist im wesentlichen komplementär zum Innenraum 5 und zu der daran anschließenden schlitzförmigen Öffnung 3 des Aufnahmeteiles 1 (C-Profilschiene) ausgebildet. Dies bedeutet, dass das Aufnahmeteil 2 ein vorzugsweise rechteckiges Stabteil 6 besitzt, das komplementär zum Innenraum 5 des Aufnahmeteiles 1 ausgebildet ist, wobei an das Stabteil 6 ein Vorsprungbereich 7 anschließt, der komplementär zur schlitzförmigen Öffnung 3 ausgebildet ist.

Das Auflageteil 8 besitzt vorzugsweise einen dem Einschubteil 2 entsprechenden Querschnitt und ist in dem der Einschubseite gegenüberliegenden Endbereich des Aufnahmeteiles 1 befestigt, vorzugsweise verdübelt, wie dies durch die unterbrochenen Linien 9 schematisch dargestellt ist. Es kann daher von dem Profil des Einschubteiles 2 in den gewünschten Längen abgetrennt werden. Eine Verdübelung in der durch die Linie 9 dargestellten Weise, bei der die Dübel durch die beiden an die Wand 10 der Profilschiene 1 angrenzenden Seitenwände 11 und durch das Aufnahmeteil 8 verlaufen, führt zu einer besonders großen Festigkeit, sodass das mit der Profilschiene 1 verbundene Aufnahmeteil 8 besonders große Haltekräfte aufnehmen kann.

Vorzugsweise ist die Länge des Einschubteiles 2 so bemessen, dass sie der Länge des Aufnahmeteiles 1 weniger der Länge des Auflageteiles 8 entspricht. Auf diese Weise ist das Einschubteil 2 vollständig in das Aufnahmeteil 1 eingeschoben, wenn es mit seiner einschubseitigen Fläche auf der Anschlagfläche 12 des Auflageteiles 8 aufliegt.

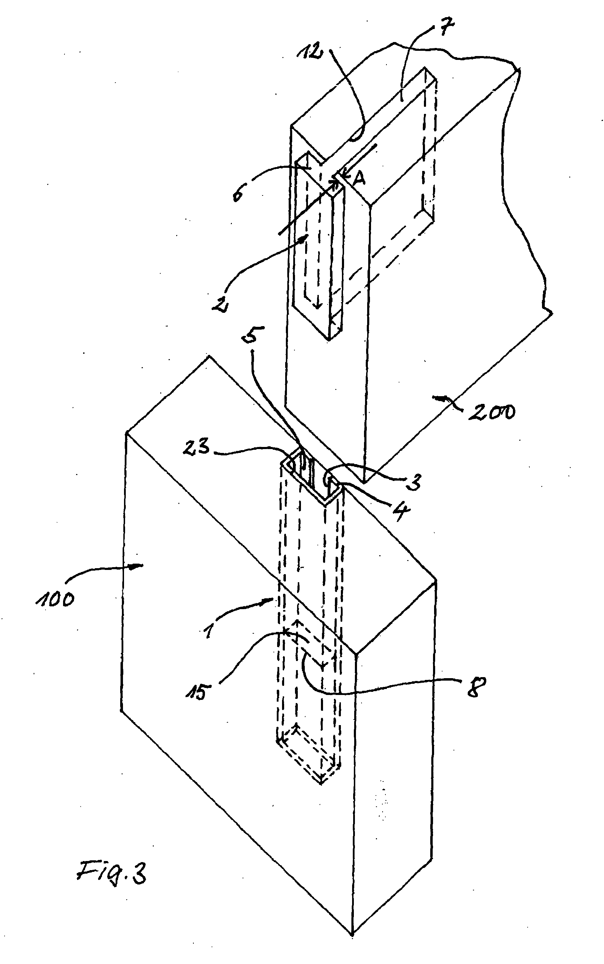

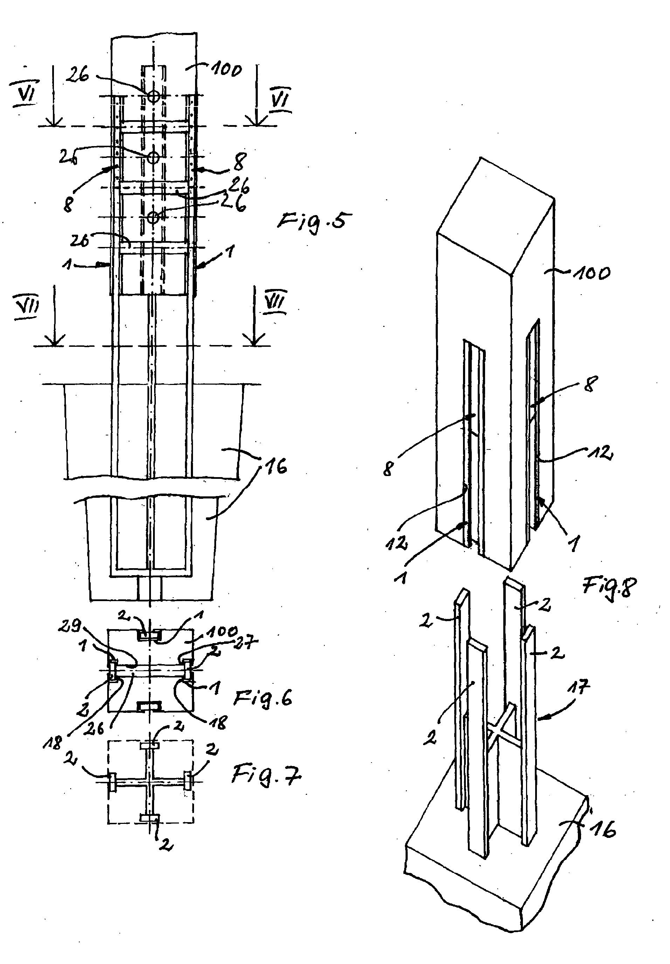

Die Figur 3 zeigt die Verbindung zwischen einer vertikal verlaufenden Stütze 100 und einem horizontal verlaufenden Träger 200. In der der Stütze 100 zugewandten Seite des Trägers 200 ist ein Schlitz 12 angeordnet, vorzugsweise eingefräst, in den ein an die Tiefe des Schlitzes 12 angepasster Vorsprungbereich 7 des Einschubteiles 2 eingesetzt ist. Der Vorsprungbereich 7 ist vorzugsweise mit der Hilfe von quer zum Schlitz 12 verlaufenden Stäben (nicht dargestellt) verdübelt. Das Aufnahmeteil 1 ist in einer Nut 23 der Stütze 100 befestigt, vorzugsweise verschraubt. Es ist erkennbar, dass das Stabteil 6 des Einschubteiles 2 in einer äußerst einfachen Weise von oben her in den Innenraum 5 des Aufnahmeteiles 1 einschiebbar ist, wobei die einander zugewandten Flächen der Stütze 100 und des Trägers 200 aneinander zur Anlage gelangen. Das Einschubteil 2 weist mit seiner dem Träger 200 zugewandten Fläche einen Abstand A von der ihm zugewandten Fläche des Trägers 200 auf, der im Wesentlichen der Dicke der Ränder 4 des Aufnahmeteils 1 entspricht.

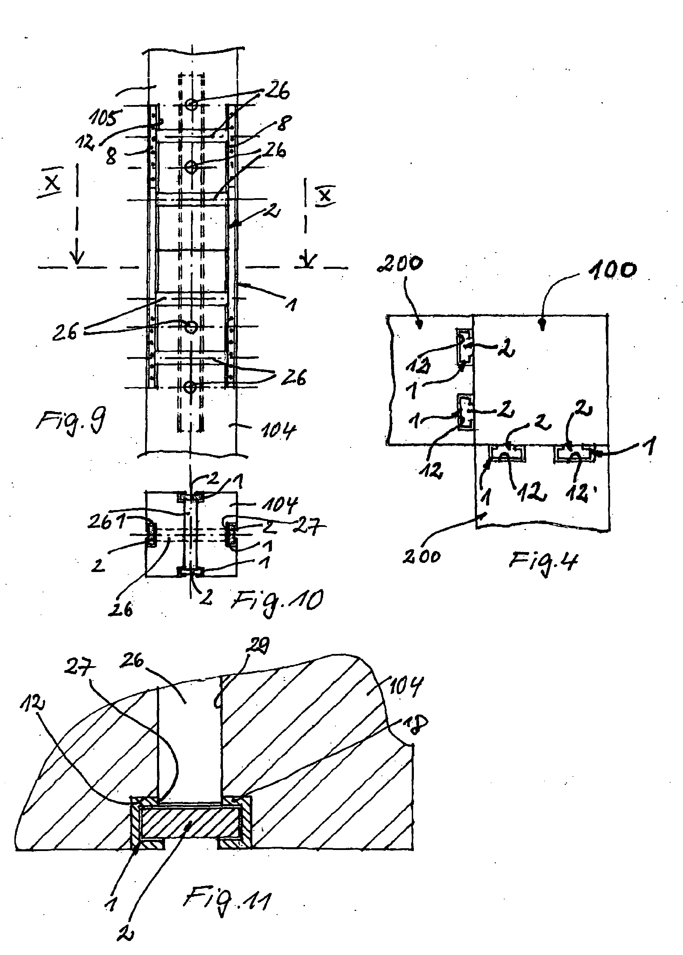

Die Figur 4 zeigt eine Über-Eck-Verbindung zwischen zwei Trägern 200 und einer Stütze 100, wobei jeweils zwei Verbindungsvorrichtungen zur Herstellung einer Verbindung verwendet sind.

Die Figuren 5 bis 8 zeigen die Art der Befestigung einer Stütze 100 an einem in einem Betonfundament 16 eingelassenen Fußteil 17, das vorzugsweise aus Stahl besteht. Dabei sind die Einschubteile 2 fest mit dem Fußteil 17 verbunden, vorzugsweise verschraubt oder verschweißt. Die Aufnahmeteile 1 sind in Nuten 12 der Stütze 100 befestigt. In den Aufnahmeteilen 1 sind oberseitig die Auflageteile 8 befestigt, sodass die Einschubteile 1 beim Aufsetzen der Stütze 100 von oben auf den Stahlfuß 17 an den Anschlagflächen 15 der Aufnahmeteile 8 anschlagen.

Vorzugsweise sind gemäß Figur 7, die einen Schnitt entlang der Linie VII bis VII der Figur 5 zeigt, sich kreuzförmig gegenüberliegend an dem Fußteil 17 vier Einschubteile 2 befestigt, die keine Vorsprungbereiche aufweisen müssen.

Die Auflageteile 8 zweier sich gegenüberliegender Aufnahmeteile 1 sind über Bolzen bzw. Stabdübel 26 verbunden, die quer durch Bohrungen 29 der vorzugsweise aus Holz bestehenden Stütze 100 und durch Bohrungen 27 der Rückwände 18 der Aufnahmeteile 1 verlaufen. Die in einer Richtung verlaufenden Stabdübel 26 sind in Bezug auf die in der anderen Richtung verlaufenden Stabdübel 26 höhenmäßig gegeneinander versetzt, damit sie sich ungehindert kreuzen können. Die Stabdübel 26 dienen zur Kraftaufnahme und Kraftübertragung.

Gemäß den Figuren 9 bis 11 können in ähnlicher Weise zwei Stützen 104 und 105, nämlich eine untere Stütze 104 und eine obere Stütze 105 Stoß an Stoß mit der Hilfe von Aufnahmeteilen 1 und Einschubteilen 2 befestigt werden. An der unteren Stütze 104 ist an jeder Seite in einer Nut 12 (Figur 11) ein Aufnahmeteil 1 fest verschraubt. In dem Aufnahmeteil 1 ist ein Einschubteil 2 befestigt, das nach oben in Richtung auf die obere Stütze 105 vorsteht. Entsprechend ist an jeder Seite der oberen Stütze jeweils in einer Nut 12 ein Aufnahmeteil 1 befestigt, in dem im oberen Endbereich ein Auflageteil 8 fixiert ist. Die Auflageteile 8 zweier sich gegenüberliegender Aufnahmeteile 1 sind über Bolzen bzw. Stabdübel 26 verbunden, die quer durch Bohrungen 29 der vorzugsweise aus Holz bestehenden oberen Stütze 105 und durch Bohrungen 27 der Rückwände 18 der Aufnahmeteile 1 verlaufen (Figur 11).

Entsprechend sind die unteren Enden der sich jeweils gegenüberliegenden, nach oben über die untere, vorzugsweise aus Holz bestehende Stütze 104 vorstehenden Einschubteile 2 in den Aufnahmeteilen 1 mit der Hilfe von Bolzen oder Dübeln 26, die durch Bohrungen 27 der Rückwände 18 und Bohrungen 29 der Stütze 100 verlaufen aneinander befestigt.

Die in einer Richtung verlaufenden Stabdübel 26 sind in den Stützen 104, 105 in Bezug auf die in der anderen Richtung verlaufenden Dübel 26 höhenmäßig gegeneinander versetzt, damit sie sich ungehindert kreuzen können. Die Dübel 26 dienen zur Kraftaufnahme und Kraftübertragung.

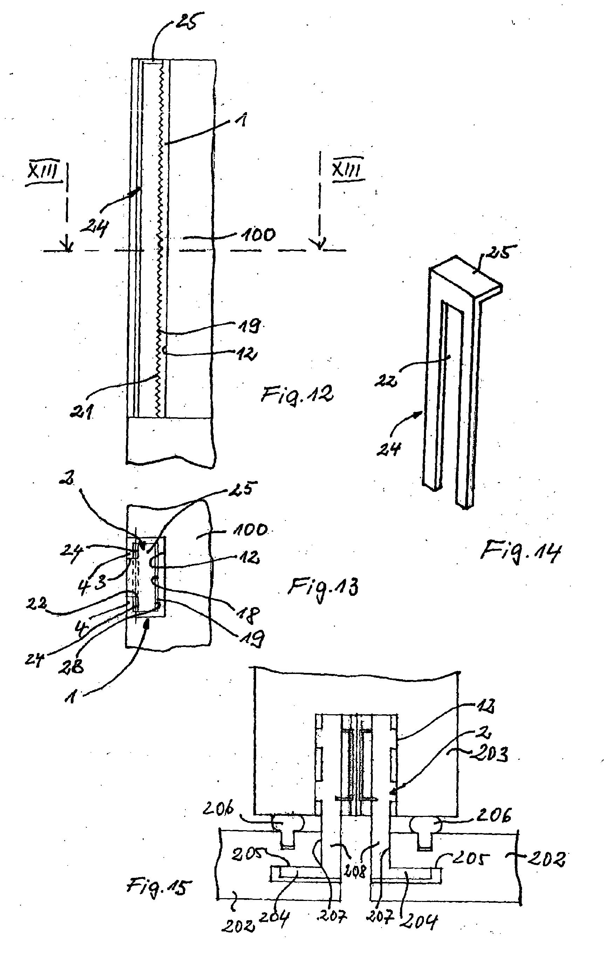

Die Fig. 10 zeigt einen Schnitt entlang der Linie X bis X der Fig. 9. Zur Verdeutlichung ist in der Figur 11 ein Teilschnitt durch eine Verbindung vergrößert dargestellt.

Gemäß den Fig. 12 bis 14 können die Aufnahmeteile 1 an der der Öffnung 3 gegenüberliegenden Innenfläche 18 quer zur Längsrichtung des Aufnahmeteiles 1 verlaufende, insbesondere sägezahnartig ausgebildete Rillen 19 aufweisen, in die komplementär dazu ausgebildete, quer zur Längsrichtung des Einschubteiles 2 verlaufende Rillen 21 eingreifen können, wenn das Einschubteil 2 in das Aufnahmeteil 1 eingesetzt ist. Die Rillen 21 sind an der dem Vorsprungbereich 7 gegenüberliegenden Fläche 28 des Einschubteiles 2 vorgesehen. Um im Montagezustand eine Trennung des über die Rillen 19 und 21 ineinandergreifenden Einschubteiles 2 und des Aufnahmeteiles 1 zu verhindern, wird von einer Seite des Aufnahmeteiles 1 her ein blech- bzw. plattenförmiges Arretierungsteil 24 eingeschoben, das zwischen den einander zugewandten Flächen der Randbereiche 4 der Öffnung 3 des Aufnahmeteiles 1 und des Einschubteiles 2 eingreift. Auf diese Weise kann verhindert werden, dass sich das Einschubteil 2 im Aufnahmeteil 1 derart von der der Öffnung 3 gegenüberliegenden Innenfläche 18 wegbewegt, dass die Rillen 19 und 21 außer Eingriff gelangen. Das Arretierungsteil 24 kann an seiner oberen Seite eine als Anschlag dienende Abwinkelung 25 ausweisen, die nach dem Einschieben an der Oberseite des Einschubteiles 2 zur Anlage gelangt. In dem gabelförmig ausgebildeten Arretierungsteil 24 ist eine in Längsrichtung verlaufende schlitzförmige Öffnung 22 vorgesehen, durch die der Vorsprungbereich 7 des Einschubteiles 2 hindurchgreifen kann, um das Einschieben des Arretierungsteiles 24 zu ermöglichen. Die Figur 11 zeigt eine perspektivische Darstellung eines Arretierungsteiles 24.

Der Vorteil dieser Ausführungsform besteht darin, dass das Auflageteil 8 entbehrlich ist, weil die Verbindung zwischen dem Einschubteil 2 und dem Aufnahmeteil 1 über die ineinandergreifende Verzahnung bzw. Rillen 19, 21 erfolgt.

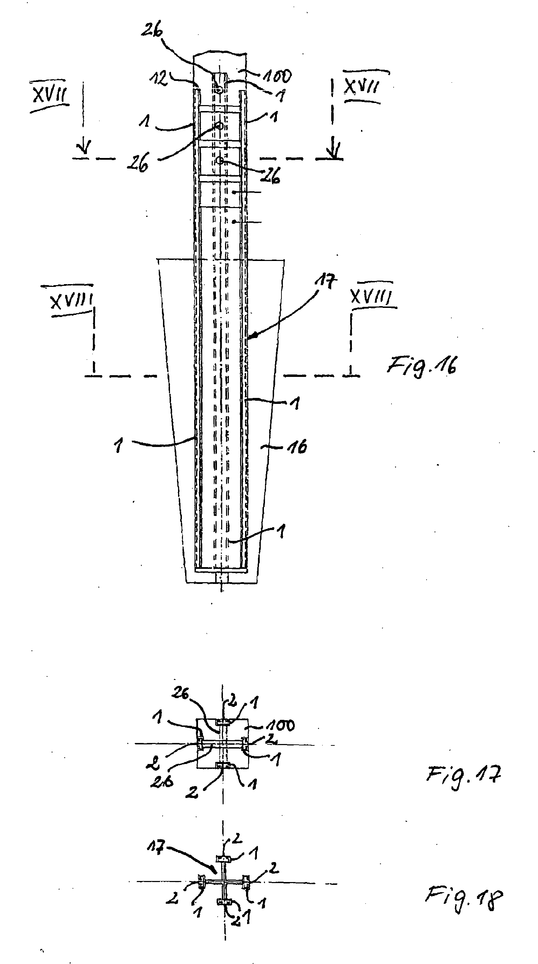

Die Figur 15 zeigt eine dritte Ausführungsform der erfindungsgemäßen Verbindungsvorrichtung zur Befestigung von plattenförmigen Elementen, beispielsweise Deckenelementen 202, an einem Träger 203. Dabei sind in einer Nut 12 des Trägers 203 vorzugsweise sich gegenüberliegend zwei Aufnahmeteile 2 angeordnet, in denen jeweils ein in einer oben beschriebenen Weise ausgebildetes Einschubteil 2 angeordnet ist. Beispielsweise sind, wie dargestellt, die Einschubteile 2 gemäß den Figuren 12 bis 14 ausgestaltet und montiert. An den über den Träger 203 hinausragenden Enden weisen die Einschubteile 2 quer zu ihrer Längserstreckung verlaufende Einsteckteile 204 auf, die in Aussparungen 205 der Deckenteile 202 eingreifen. In der ersichtlichen Weise können zwischen der Stirnseite des Trägers 203 und den diesen zugewandten Flächen der Deckenelemente 202 Dichtungselemente 206 angeordnet werden, die bei der Montage der Deckenelemente 202 an dem Träger 203 zusammengedrückt werden und ihre Dichtwirkung entfalten. Die zu den Einsteckteilen 204 verlaufenden Verlängerungen 208 der Einschubteile 2 sind vorzugsweise in Nuten 208 der Deckenelemente 202 angeordnet, so dass sie nicht über diese nach außen überstehen.

Eine Alternative zur Befestigung von Platten 90 an einer Unterkonstruktion 91 besteht gemäß den Figuren 25 bis 27 darin, dass die Unterkonstruktion 91, wie beschrieben, mit C-Profilschienen in einer Ausfräsung 92 versehen wird, die als Aufnahmeteile 1 dienen. Einzelheiten der Figuren 25 bis 27, die bereits im Zusammenhang mit anderen Figuren erläutert wurden, sind in der entsprechenden Weise bezeichnet.

Die Platten 90 werden mit Rechteckprofilstücken versehen, welche als Einschubteile 2 dienen. Die Recheckprofilstücke werden mit einer Bohrung 93 in Längsrichtung und einer Bohrung 94 in Querrichtung versehen. In die querliegenden Bohrungen 94 werden Stifte 51 mit vorzugsweise runden Kopfteilen 66 und Druckfedern 52 so eingesetzt, dass die Stifte 51 mit den Kopfteilen 66 in der Mittelachse der Längsbohrung 94 aneinander anliegen (z.B. Figur 26, rechte Seite). Beim Einführen eines angespitzten Verriegelungsstiftes 61, z.B. eines angespitzten Rundstabes, in die Längsbohrung 94 werden die Kopfteile 66 auseinander geschoben und dringen die Stifte 51 in entsprechende Bohrungen 49 in den Seitenwänden der C-Profilschienen ein (z.B. Figur 27 linke Seite). Die Arretierung kann durch eine Druckfeder 81 gesichert werden. Mit der Hilfe eines Stiftelementes 95, das z.B. in den Verriegelungsstift 61 eingeschraubt ist, und durch einen Schlitz 96 in dem Rechteckprofilstück hindurchragt, kann der Verriegelungsstift 61 gegen die Kraft der Druckfeder 81 bewegt werden, um die Arretierung zu lösen. Zu bedienen ist der Verriegelungsstift 61 mit dem Stiftelement 95 durch eine Fuge 97 neben einer bzw. zwischen den Platten 90. Die Befestigung der Rechteckprofilstücke an den Platten erfolgt durch Anschrauben (Bezugszeichen 98) in einer Ausfräsung 99 an der Seite der Platte 90.

Als Alternative zu der Ausführungsform der Figuren 5 bis 7 zeigen die Figuren 16 bis 18 eine andere Art einer Verbindung zwischen einer vorzugsweise aus Holz bestehenden Stütze 100 und einem in einem Betonfundament 16 eingelassenen Fußteil 17. Dabei sind die Aufnahmeteile 1 in der ersichtlichen Weise kreuzförmig und fest mit dem Fußteil 17 verbunden, vorzugsweise verschraubt oder verschweißt. Weitere Aufnahmeteile 1 sind in Nuten 12 der Stütze 100 sich gegenüberliegend befestigt, wobei sich gegenüberliegende Aufnahmeteile mit der Hilfe von Stabdübeln 26 in der oben erläuterten Weise miteinander verbunden sind. Bei der Montage wird von oben her jeweils ein Einschubteil 2 derart in ein Aufnahmeteile 1 des Fußteiles 17 eingebracht und befestigt, dass es nach oben übersteht. Dann werden die Aufnahmeteile 1 der Stütze 100 von oben her auf die überstehenden Bereiche der Einschubteile 2 aufgeschoben.

Im Folgenden werden im Zusammenhang mit den Figuren 19 und 20 bzw. 21 und 22 weitere Ausführungsformen der erfindungsgemäßen Verbindungsvorrichtung erläutert, wobei Einzelheiten, die bereits im Zusammenhang mit den voranstehenden Figuren erläutert wurden, in der entsprechenden Weise bezeichnet sind.

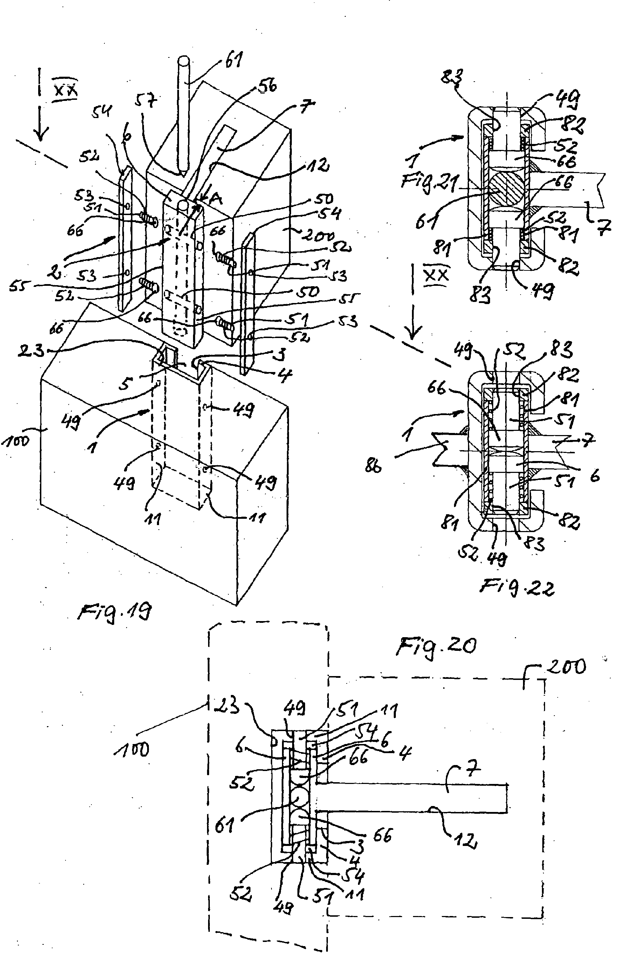

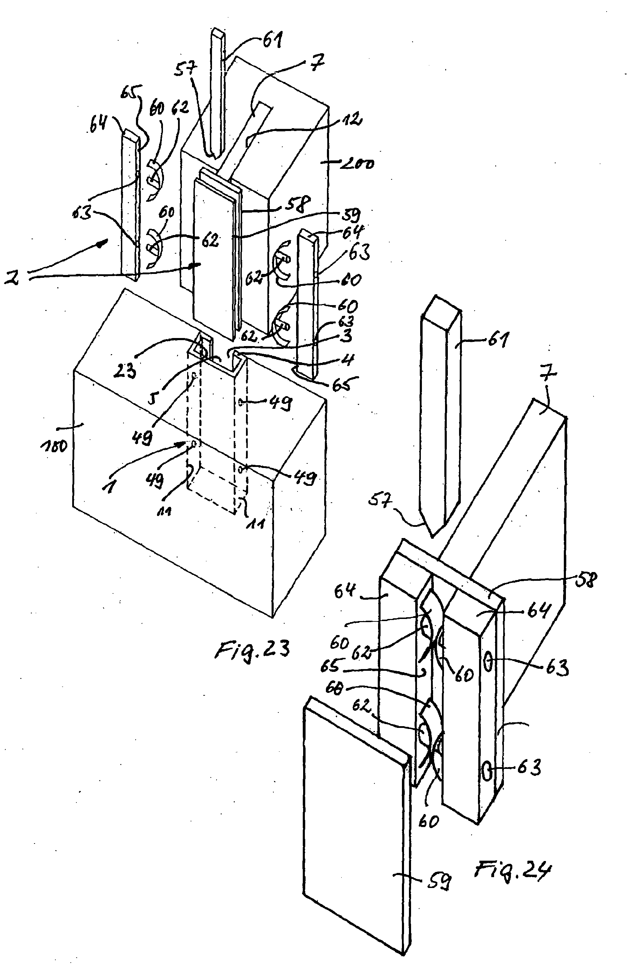

Die Figuren 19 und 20 zeigen eine Verbindungsvorrichtung, bei der das in einer Nut 23, die sich beispielsweise in einer Stütze 100 befindet, angeordnete Aufnahmeteil 1 in bereits erläuterter Weise die Form eines Befestigungselementes besitzt, das im Wesentlichen aus einer einen Innenraum 5 umschließenden C-Profilschiene besteht, die vorzugsweise einen rechteckigen Querschnitt aufweist. In der Wand 10 weist die Profilschiene die in Längsrichtung verlaufende schlitzförmige Öffnung 3 auf, deren in Längsrichtung verlaufende Ränder mit 4 bezeichnet sind. Die schlitzförmige Öffnung 3 steht mit dem Innenraum 5 in Verbindung.

Das Einschubteil 2, das das andere Befestigungselement der vorliegenden Verbindungsvorrichtung bildet, ist im wesentlichen komplementär zum Innenraum 5 und zu der daran anschließenden schlitzförmigen Öffnung 3 des Aufnahmeteils 1 ausgebildet. Es weist daher vorzugsweise ein rechteckiges Stabteil 6 auf, das komplementär zum Innenraum 5 des Aufnahmeteils 1 ausgebildet ist, wobei an das Stabteil 6 ein Vorsprungbereich 7 anschließt, der sich senkrecht zum Stabteil 6 erstreckt und in einer schlitzförmigen Nut 12 beispielsweise des Trägers 200 befestigbar ist, derart, dass das Stabteil 6 parallel zu der ihm zugewandten Fläche des Trägers 200 verläuft und von diesem durch einen Abstand A beabstandet ist, der im Wesentlichen der Dicke der Ränder 4 des Aufnahmeteils 1 entspricht.

Das Aufnahmeteil 1 weist an seinen senkrecht zu den Rändern 4 verlaufenden Seitenwänden 11 in Längsrichtung rasterförmig voneinander beabstandete Löcher 49 auf, von denen sich in Querrichtung vorzugsweise zwei gegenüberliegen.

Dem Abstand der Löcher 49 entsprechend weist das Einschubteil 2 in Querrichtung verlaufende Durchgangsbohrungen 50 auf, in die von beiden Seiten her Stifte 51 eingesetzt sind, die durch sie umgebende Druckfedern 52 druckbeaufschlagt sind. Dabei stützen sich die Druckfedern 52 einerseits an sich gegenüber dem Schaft der Stifte 51 erweiterten Kopfteilen 66 ab, die in den Durchgangsbohrungen 50 angeordnet sind. Die den genannten Kopfteilen abgewandten Enden der Stifte 51 durchgreifen Löcher 53, die in streifen- und plattenförmigen Bauteilen 54 angeordnet sind, die im Montagezustand an den Seitenflächen 55 des Einschubteiles 2 befestigt sind, wobei sich die den Kopfteilen der Stifte 51 abgewandten Enden der Druckfedern 52 an den ihnen zugewandten Flächen der Bauteile 54 abstützen. Im Montagezustand sind die an den Seitenflächen 55 des Einschubteiles 2 anliegenden Bauteile 54 zusammen mit dem Stabteil 6 des Einschubteiles 2 in die Öffnung 5 des Aufnahmeteiles 1 eingeschoben, wobei die Kopfteile zweier sich gegenüberliegender Stifte 51 in den Durchgangsbohrungen 54 wegen der Druckkraft der Druckfedern 52 aneinander anliegen, wie dies die Figur 20 zeigt.

Zur Verriegelung des Einschubteiles 2 am Aufnahmeteil 1 wird ein Verriegelungsstift 61 in eine Bohrung 56 eingeschoben, die mittig durch das Stabteil 6 des Einschubteiles 2 in Längsrichtung verläuft. Der Verriegelungsstift 61 weist dabei vorzugsweise eine Spitze 57 auf, die beim Einschieben des Verriegelungsstiftes 61 in die Bohrung 56 als Einfahrschräge dient und das Durchschieben des Verriegelungsstiftes 61 durch die aneinander anliegenden Kopfteile 51 erleichtert. Dabei werden die Kopfteile 51 zweier sich gegenüberliegender Stifte 51 gegen die Kraft der Federn 52 nach außen gedrückt, derart, dass die den Kopfteilen 51 abgewandten Endbereiche der Stifte 51 aus den Löchern 53 herausragen und in die Löcher 49 des Aufnahmeteiles 1 zur Verriegelung des Einschubteiles 2 am Aufnahmeteil 1 verriegelnd eingreifen.

Zur Entriegelung wird der Verriegelungsstift 61 aus der Bohrung 56 herausgezogen, wobei dann durch die Druckkraft der Federn 52 die genannten Endbereiche aus den Löchern 49 des Aufnahmeteiles 1 herausbewegt werden.

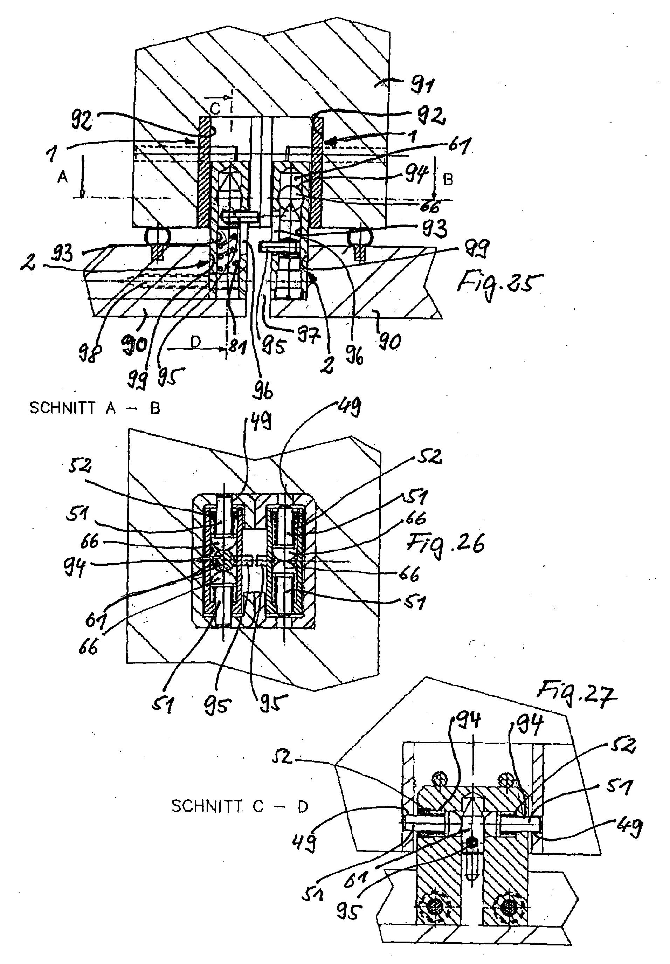

Im Zusammenhang mit den Figuren 21 und 22 wird eine Ausgestaltung der Ausführungsform der Figuren 19 und 20 erläutert. Das Einschubteil 1 entspricht demjenigen der Ausführungsform der Figuren 19 und 20. Anstelle des kompakten Stabteiles 6 mit den Durchgangsbohrungen 50 sind zwei sich mit Abstand gegenüberliegende rechteckige Plattenteile 81 vorgesehen, die mit seitlichen Plattenteilen 82 zu einem rechteckigen Hohlkörper verbunden sind, der in den Innenraum des Aufnahmeteiles 1 einschiebbar ist. In den Innenraum des genannten Hohlkörpers sind die oben bereits erläuterten Stifte 51 mit den Kopfteilen 66 und den Druckfedern 52 eingesetzt, derart, dass die den Kopfteilen 66 abgewandten Endbereiche der Stifte 51 Bohrungen 83 durchgreifen, die sich in den Plattenteilen 82 befinden. Die Druckfedern 52 stützen sich dabei an den Rändern der Bohrungen 83 ab.

Wenn der Verriegelungsstift 61 gemäß Figur 21 zwischen die Kopfteile 66 in der oben erläuterten Weise eingeschoben wird, werden die Stifte 51 nach außen gedrückt, sodass ihre Endbereiche verriegelnd in die Löcher 49 des Aufnahmeteiles 1 eingreifen.

An einem Plattenteil 81 ist der bereits genannte Vorsprungbereich 7 befestigt, vorzugsweise verschweißt. Anstelle dieses Vorsprungbereiches 7 können auch andere Befestigungselemente, beispielsweise Nagel- oder Schraubenelemente oder dergleichen zur Befestigung des Einschubteiles 2 an einem Bauteil vorgesehen sein, die die Öffnung 3 des Aufnahmeteiles 1 durchgreifen. Entsprechende Befestigungselemente 86 können auch am Einschubteil 1 zur Befestigung desselben an einem Bauteil vorgesehen sein.

Bei der Ausführungsform der Figuren 23 und 24 weist das Aufnahmeteil 1 dieselbe Form auf wie dasjenige der Figur 19. Das Einschubteil 2 umfasst dagegen ein am Vorsprungbereich 7 befestigtes erstes Plattenteil 58 sowie ein davon beabstandetes zweites Plattenteil 59, die jeweils komplementär zum Innenraum 5 des Aufnahmeteiles 1 ausgebildet sind. In den Abstand zwischen den Plattenteilen 58 und 59 sind Federelemente 60 angeordnet, die vorzugsweise die Form von bogenförmig verlaufenden Blattfederteilen aufweisen, die in den Zwischenraum zwischen den Plattenteilen 58 und 59 eingreifen und mit ihren konvexen Bereichen einander zugewandt sind, wobei sie Stiftteile 62 besitzen, die in in Querrichtung verlaufenden Bohrungen 63 eingreifen, die entsprechend dem Abstand zwischen den Löchern 49 des Aufnahmeteiles 1 voneinander beabstandet in streifenförmigen Plattenelementen 64 angeordnet sind, die ebenfalls in den Zwischenraum zwischen den Plattenteilen 58 und 59 eingreifen. Die Plattenteile 58, 59 und die Plattenelemente 64 bilden zusammen das Einschubteil 1.In dem voranstehend beschriebenen Zustand stützen sich die freien Enden der bogenförmigen Federteile 60 an den ihnen zugewandten Rändern 65 der Plattenteile 64 federnd ab, wobei die konvexen Bereiche der Federteile 60 federnd aneinander anliegen, wenn die Plattenteile 58, 59 mit den Plattenelementen 64 in den Innenraum 5 des Aufnahmeteiles 1 eingesetzt und an den Plattenteilen 58, 59 fixiert sind.

Zur Verriegelung des Einschubteiles 2 am Aufnahmeteil 1 wird gemäß Figur 22 ein Verriegelungsstift 61, der vorzugsweise einen rechteckigen Querschnitt besitzt, in der Längsrichtung in den Zwischenraum zwischen den Plattenteilen 58 und 59 derart eingeschoben, dass seine als Einfahrschräge dienende Spitze 57 zwischen zwei sich in Querrichtung gegenüberliegende Federteile 60 eingeschoben wird, derart, dass die Federteile 60 in Querrichtung auseinandergedrückt werden, wobei ihre Stiftteile 62 aus den Bohrungen 63 nach außen heraustreten und zur Verriegelung des Einschubteiles 2 am Aufnahmeteil 1 in die Löcher 49 desselben eintreten.

Im folgenden werden Beispiele für die Verwendung der beschriebenen Verbindungsvorrichtungen auf dem Gebiete des Hausbaues erläutert. Dabei ist die Erfindung insbesondere im Zusammenhang mit einem System zum flexiblen Erstellen von Häusern vorteilhaft, um die erforderlichen Verbindungen zwischen zwei Bauteilen herstellen zu können, wie es in der EP 04023431.2 A1 erläutert ist.

Im folgenden werden einige besonders bedeutsame Beispiele für Verbindungen zwischen zwei Bauteilen erläutert. Für den sukzessiven Auf-und Abbau von Häusern, "just in time" in Eigenleistung durch den Bauherren oder durch von ihm eingesetzte Hilfskräfte. Vorteilhafterweise sind die vorliegenden Verbindungsvorrichtungen so gestaltet, dass die vom Fachmann vorgefertigten Bauteile, aus denen die Häuser möglichst einfach und dennoch sicher vom Laien montiert, demontiert und erneut montiert werden können. Dabei hat sich als einfachste, ungefährliche, kraftschlüssige und für alle Fälle geeignete Verbindungsvorrichtung die nach dem Vorbild der Gratschiene entwickelte Verbindung von T-Schiene (entspricht Einschubteil 2) und T-Nut-Schiene (entspricht Aufnahmeteil 1) gemäß der vorliegenden Verbindungsvorrichtung herausgestellt. Dementsprechend werden das eine der zu verbindenden Bauteile mit einer T-Schiene und das andere Bauteil mit einer T-Nut-Schiene versehen. Die Verbindung der beiden Bauteile erfolgt durch das Einschieben des einen Verbindungselementes in das andere Verbindungselement der vorliegenden Verbindungsvorrichtung und die kraftschlüssige Verbindung beider Verbindungselemente.

Die Befestigung der Verbindungselemente bzw. Schienen an den Bauteilen erfolgt mit Schrauben, die den jeweils aufzunehmenden Lasten entsprechen. Die Lasten werden nach der jeweiligen Position im System auf verschiedene Weise von dem einen zum anderen Bauteil übertragen. Folgende Anschlüsse sind beispielsweise herzustellen:

### Stütze an Stützenfuß (gemäß den Figuren 5 bis 8)

Die Kräfte aus den Stützen 100 werden z.B. durch zwei mal drei Stabdübel in die T-Nut-Schienen 1 in der Stütze 100 und von dort aus in die Flachstahlstäbe 17 der Stützenfüße geleitet, die im Fundament 16 eingespannt sind. Die Flachstahlstäbe 17 sind bis zum Ansatz der Holzstütze 100 durch eine Stahlstütze mit kreuzförmigem Grundriss (Figur 7) miteinander verbunden, dringen jeweils nach oben bis zur Hälfte in die T-Nut-Schienen 1 ein und stoßen dort auf ein Auflageteil 8 (Endstopfen), das im oberen Teil mit der T-Nut-Schiene 1 verschraubt ist, um die Lasten zu übernehmen.

### Stütze an Stütze (gemäß den Figuren 9 bis 11)

Der Anschluss einer Stütze 104 an eine andere Stütze 105 erfolgt prinzipiell wie der Anschluss der Stütze 100 an den Stützenfuß gemäß den Figuren 5 und 6. Am oberen Ende der unteren Stütze 104 und am unteren Ende der oberen Stütze 105 wird an den vier Seiten der Stützen jeweils eine T-Nut-Schiene 1 eingesetzt und durch je zwei mal zwei Stabdübel mit den Stützen verbunden. In die T-Nut-Schienen der unteren Stütze 104, werden jeweils Flachstahlschienen 2 befestigt, die etwa bis zur Hälfte in die T-Nut-Schienen 1 der oberen Stütze 105 eindringen und dort auf die eingeschraubten Endstopfen 8 stoßen, um die Lasten zu übernehmen.

### Hauptträger an Stütze (gemäß Figur 4)

Der Anschluss Hauptträger 200 an Stütze 100 erfolgt z.B. mit zwei Paaren von Verbindungsvorrichtungen. Die 1-Nut-Schienen 1 sitzen auf der Länge der Hauptträgerhöhe in Nuten 12 am Kopf der Hauptträger 200 mit eingeschraubten Endstopfen zur Übergabe der Lasten. An den Stützen 100 sind T-Schienen 2 mit einer Länge der Höhe des Hauptträgers abzüglich der Endstopfen zur Übernahme der Lasten angeschraubt. verschlossen halten.

### Nebenträger an Hauptträger

Der Anschluss Nebenträger an Hauptträger erfolgt mit einem Verbindungsvorrichtungspaar indem eine T-Nut-Schiene 1 mit der Länge der Höhe des Nebenträgers in einer Nut 12 am Kopf des Nebenträgers befestigt wird. Am oberen Ende der T-Nut-Schiene 1 ist ein Endstopfen 8 eingeschraubt, um die Lasten zu übergeben. Am Hauptträger ist auf die Länge der Höhe des Nebenträgers eine T-Schiene 1 abzüglich Endstopfen eine T-Schiene 1 angeschraubt, um die Lasten zu übernehmen.

### Randbohle an Hauptträger

Der Anschluss Randbohle an Hauptträger erfolgt beim EG-Boden mit Stufenfalz von unten, beim OG-Boden ohne Stufenfalz und beim DG-Boden mit Stufenfalz von oben. In einer Nut am Hauptträger werden jeweils T-Nut-Schienen 1 eingeschraubt. An den Randbohlen werden T-Schienenstücke 2 angeschraubt. Die Randbohlen werden mit ihren T-Schienenstücken 2 in die T-Nut-Schienen 1 der Hauptträger eingeschoben und mit der Hilfe von Endstopfen oder Federbolzen arretiert.

### Pfosten an Stütze

Der Anschluss Pfosten an Stütze erfolgt mit horizontal befestigten Paaren von Verbindungsvorrichtungen. T-Schienen 2 werden auf die Länge des Stufenfalzes an den Pfosten angeschraubt und in T-Nut-Schienen 1, die in Nuten 12 an der Stütze eingeschraubt sind, eingeschoben. Der Anschluss wird mit der Hilfe von Federbolzen arretiert.

### Riegel an Pfosten

In horizontale Nuten 12 am Ende der Riegel werden T-Nut-Schienen 1 eingeschraubt und auf die an den Pfosten angeschraubten T-Schienen 2 geschoben. Der Anschluss wird mit der Hilfe von Federbolzen arretriert,

### Riegel an Hauptträger

Der Anschluss erfolgt analog dem Anschluss Pfosten an Stütze

### Fußpfette an Stütze

Der Anschluss Fußpfette an Stütze erfolgt durch Einschieben der an der Fußpfette angeschraubten T-Schienen 2 in die in eine Nut 12 eingeschraubten T-Nut-Schienen 1 an der Stütze. Der Anschluss wird mit der Hilfe von Federbolzen arretiert.

### Fenster- und Blendrahmen an Pfosten

In horizontale Nuten 12 der Fensterrahmen und Blendrahmenteile werden T-Nut-Schienen 1 eingeschraubt und auf eine T-Schiene 2, die auf dem Pfosten angeschraubt ist aufgeschoben. Der Anschluss wird mit der Hilfe von Federbolzen arretiert.

### Bezugszeichen

- 1: Aufnahmeteil
- 2: Einschubteil
- 3: Öffnung
- 4: Rand
- 5: Innenraum
- 6: Stabteil
- 7: Vorsprungbereich
- 8: Auflageteil
- 9: Linie
- 10: Wand
- 11: Seitenwand
- 12: Nut
- 13: Loch
- 14: Wand
- 15: Auflagefläche
- 16: Betonfundament
- 17: Fußteil
- 18: Innenfläche
- 19: Rille
- 20: Bohrung
- 21: Rille
- 22: Öffnung
- 23: Nut
- 24: Arretierungsteil
- 25: Abwinkelung
- 26: Stabdübel
- 27: Bohrung
- 28: Bohrung
- 29: Bohrung
- 49: Loch
- 50: Durchgangsbohrung
- 51: Stift
- 52: Druckfeder
- 53: Loch
- 54: Bauteil
- 55: Seitenfläche
- 56: Bohrung
- 57: Spitze
- 58: Plattenteil
- 59: Plattenteil
- 60: Federteil
- 61: Verriegelungsstift
- 62: Stiftteil
- 63: Bohrung

- 64: Plattenelement
- 65: Rand
- 66: Kopfteil
- 90: Platte
- 91: Unterkonstruktion
- 92: Ausfräsung
- 93: Bohrung
- 94: Bohrung
- 95: Stiftelement
- 96: Schlitz
- 97: Fuge
- 98: Verschraubung
- 99: Ausfräsung
- 100: Stütze
- 104: Stütze
- 105: Stütze
- 130: Pfeil
- 200: Träger
- 201: Fläche
- 202: Deckenteil
- 203: Stütze
- 204: Einsteckteil
- 205: Aussparung
- 206: Dichtungselement

## Patentansprüche

1. Verbindungsvorrichtung zum Verbinden eines ersten Bauteiles (100) mit einem zweiten Bauteil (200), mit einem an dem ersten Bauteil (100) zu befestigenden Aufnahmeteil (1) und einem an dem zweiten Bauteil (200) zu befestigenden Einschubteil (2), **dadurch gekennzeichnet, dass** das Aufnahmeteil (1) die Form einer einen Innenraum (5) umschließenden Profilschiene aufweist, wobei sich der Innenraum (5) über eine in Längsrichtung verlaufende schlitzförmige Öffnung (3) nach außen öffnet, dass das Einschubteil (2) ein in den Innenraum (5) einschiebbares Teil (6) ist, und dass zwischen dem Aufnahmeteil (1) und dem Einschubteil (2) wenigstens ein Verriegelungselement (8; 19, 21; 49, 51; 49, 62) zur Verriegelung des in das Aufnahmeteil (1) eingeschobenen Einschubteiles (2) an einer vorgegebenen Position vorgesehen ist.

2. Verbindungsvorrichtung nach Anspruch 1, **dadurch gekennzeichnet, dass** das Einschubteil (2) im wesentlichen ein komplementär zum Innenraum (5) ausgebildetes Stabteil (6) ist.

3. Verbindungsvorrichtung nach Anspruch 2, **dadurch gekennzeichnet**, das Stabteil (6) einen die schlitzförmigen Öffnung (3) durchgreifenden Vorsprungbereich (7) umfasst.

4. Verbindungsvorrichtung nach einem der Ansprüche 1 bis 3, **dadurch gekennzeichnet, dass** das Verriegelungselement die Form eines in das Aufnahmeteil
(1) einschiebbaren und an einer vorbestimmten Position desselben befestigbaren Auflageteiles (8) für das Einschubteil (2) aufweist.

5. Verbindungsvorrichtung nach Anspruch 4, **dadurch gekennzeichnet, dass** das Auflageteil (8) im wesentlichen ein komplementär zum Innenraum (5) ausgebildeten Stabteil ist.

6. Verbindungsvorrichtung nach Anspruch 5, **dadurch gekennzeichnet, dass** das Stabteil ferner einen komplementär zur schlitzförmigen Öffnung (3) ausgebildeten Vorsprungbereich (7) umfasst..

7. Befestigungsvorrichtung nach einem der Ansprüche 4 bis 6, **dadurch gekennzeichnet, dass** das Auflageteil (8) in dem Einschubteil (2) mit Schraubelementen (9) verschraubt ist, die vorzugsweise durch das Auflageteil (8) und durch Seitenwände (11) des Aufnahmeteils (1) verlaufen, die sich quer zur Längsachse des Aufnahmeteils (1) gegenüberliegen.

8. Verbindungsvorrichtung nach einem der Ansprüche 1 bis 3, **dadurch gekennzeichnet, dass** die Verriegelungsvorrichtung quer zu Längsrichtung des Aufnahmeteiles (1) verlaufende, sägezahnartig ausgebildete Rillen (19) aufweist, die sich an der der schlitzförmigen Öffnung (3) gegenüberliegenden Innenfläche (18) des Aufnahmeteils (1) befinden und in quer zur Längsachse des Einschubteiles (2) verlaufende weitere Rillen (21) des Einschubteiles (2) eingreifen, wenn das Einschubteil (2) in das Aufnahmeteil (1) eingesetzt ist und sich in der vorgegebenen Position befindet.

9. Verbindungsvorrichtung nach Anspruch 8, **dadurch gekennzeichnet, dass** ein Arretierungsteil (24) vorgesehen ist, das plattenförmig ausgebildet ist, und zwischen die einander zugewandten Flächen der Randbereiche (4) der schlitzförmigen Öffnung (3) des Aufnahmeteiles (1) und des Einschubteiles (2) einschiebbar ist, sodass sich das Einschubteil (2) im Aufnahmeteil (1) von der schlitzförmigen Öffnung (3) zur gegenüberliegenden Innenfläche (18) bewegt, um die Rillen (19) sowie die weiteren Rillen (21) in Eingriff zu halten.

10. Verbindungsvorrichtung nach Anspruch 8 oder 9, **dadurch gekennzeichnet, dass** das Arretierungsteil (24) an seiner oberen Seite eine als Anschlag dienende Abwinklung (25) aufweist, die nach dem Einschiebenan der Oberseite des Einschubteiles (2) zur Anlage gelangt.

11. Verbindungsvorrichtung nach einem der Ansprüche 9 oder 10, **dadurch gekennzeichnet, dass** das Arretierungsteil (24) eine in Längsrichtung verlaufende weitere schlitzförmige Öffnung (22) aufweist, in die beim Einschieben des Arretierungsteiles (24) der Vorsprungbereich (7) des Einschubteiles (2) eingreifen kann.

12. Verbindungsvorrichtung nach einem der Ansprüche 1 bis 3, **dadurch gekennzeichnet, dass** das Aufnahmeteil (1) als Verriegelungselement wenigstens zwei sich quer zur Längsrichtung des Aufnahmeteiles (1) gegenüberliegende Löcher (49) aufweist, in die die Endbereiche von Stiften (51) eingreifen können, wenn sich das Einschubteil (2) in der vorbestimmten Position befindet, wobei die Stifte(51) durch Druckfedern (52) derart beaufschlagt sind, dass ihre den Endbereichen abgewandten Kopfteile (66) aneinander anliegen, und dass ein Verriegelungsstift (61) vorgesehen ist, der in Längsrichtung des Einschubteiles (2) in dieses (6) einschiebbar ist, um zwischen die aneinanderliegenden Kopfteile (66) einzugreifen und die Endbereiche der Stifte (61) in die Löcher (49) zu drücken.

13. Verbindungsvorrichtung nach Anspruch 12, **dadurch gekennzeichnet, dass** das Einschubteil (2) als Stabteil (6) ausgebildet ist, das quer zur Längsrichtung des Einschubteiles (2) verlaufenden Durchgangsbohrungen (50) aufweist, in denen die Stifte (51) enthalten sind und dass der Verriegelungsstift (61) in einer in Längsrichtung des Stabteiles (6) verlaufende Bohrung (56) angeordnet ist.

14. Verbindungsvorrichtung nach Anspruch 12, **dadurch gekennzeichnet, dass** das Einschubteil (2) als hohles Stabteil (6) ausgebildet ist, das aus zwei parallelen, voneinander beabstandeten Plattenteilen (58, 59) und zwei seitlich daran befestigten Plattenelementen (64) besteht, dass quer zur Längsrichtung des Einschubteiles (2) in den Plattenelementen (64) Bohrungen (63) angeordnet sind, in die die Stifte (51) eingreifen.

15. Verbindungsvorrichtung nach Anspruch 14, **dadurch gekennzeichnet, dass** die Druckfedern ((52) die Stifte (51) umgebende Schraubenfedern sind, die sich einerseits am Kopfteil (66) und andererseits am Randbereich der Bohrung (63) abstützen.

16. Verbindungsvorrichtung nach Anspruch 12 oder 13, **dadurch gekennzeichnet, dass** die Druckfedern (52) die Stifte (51) umgebende Schraubenfedern sind, die sich einerseits am Kopfteil (66) und andererseits am Randbereich von Bohrungen (53) abstützen, die in plattenförmigen Bauteilen (54) angeordnet sind, die seitlich am Stabteil (6) angeordnet sind.

17. Verbindungsvorrichtung nach einem der Ansprüche 12 bis 16, **dadurch gekennzeichnet, dass** in der Längsrichtung des Einschubteiles (6) mehrere Durchgangsbohrungen (54) und ggf. in den Bauteilen (54) mehrere Bohrungen (53) voneinander beabstandet vorgesehen sind, und dass in der Längsrichtung des Aufnahmeteiles (1) von einander beabstandet mehrere Löcher (49) angeordnet sind.

18. Verbindungsvorrichtung nach einem der Ansprüche 14 bis 16, **dadurch gekennzeichnet, dass** in der Längsrichtung des Einschubteiles (6) mehrere Bohrungen (63) voneinander beabstandet in den Plattenelementen (64) vorgesehen sind, und dass in der Längsrichtung des Aufnahmeteiles (1) voneinander beabstandet mehrere Löcher (49) angeordnet sind.

19. Verbindungsvorrichtung nach einem der Ansprüche 1 bis 18, **dadurch gekennzeichnet, dass** zur Befestigung des Einschubteiles (2) an dem zweiten Bauteil (200) an dem Einschubteil (2) ein Vorsprungbereich (7) angeordnet ist, der in einem Schlitz (12) des zweiten Bauteiles (200) befestigbar ist.

20. Verbindungsvorrichtung nach einem der Ansprüche 1 bis 19, **dadurch gekennzeichnet, dass** das Aufnahmeteil (1) in einer Nut (23) des ersten Bauteiles (100) befestigbar ist, derart, dass die Öffnung (3) nach außen weist.

21. Verbindungsvorrichtung nach einem der Ansprüche 12 bis 20, **dadurch gekennzeichnet, dass** an dem Verriegelungsstab (61) ein sich quer zur Stabachse erstreckender Stift (95) angeordnet ist, der einen Schlitz (96) des Einschubteiles (2) durchgreift und von außen zum Verschieben des Verriegelungsstiftes (61) betätigbar ist.

22. Verbindungsvorrichtung nach Anspruch 21, **dadurch gekennzeichnet, dass** der Verriegelungsstab (61) gegen die Kraft einer Druckfeder (81) in die Stellung verschiebbar ist, in der er die Kopfteile (66) freigibt.

23. Anwendung der Verbindungseinrichtung nach einem der Ansprüche 1 bis 22 im Bauwesen zur Befestigung einer Stütze an einem Stützenfuß, einer Stütze an einer weiteren Stütze, eines Hauptträgers an einer Stütze, eines Nebenträgers an einem Hauptträger, eines Randträgers an einem Hauptträger, eines Pfostens an einer Stütze, einer Pfette an einer Stütze, eines Riegels an einem Pfosten, eines Fenster- und Blendrahmens an einem Pfosten und von Platten an einer Unterkonstruktion.
